# EUROPÄISCHE PATENTSCHRIFT

(11) **EP 3 592 541 B1**
(45) Veröffentlichungstag und Bekanntmachung des Hinweises auf die Patenterteilung: **09.04.2025**
(21) Anmeldenummer: 18712797.2
(22) Anmeldetag: 06.03.2018
(51) Int. Cl.: B29C 71/04, B29D 23/00, B29C 35/10, B29C 35/08, B29L 23/00

(54) **VERFAHREN ZUR ELEKTRONENSTRAHLVERNETZUNG EINES FLEXIBLEN KUNSTSTOFF-SCHLAUCHES**
METHOD FOR ELECTRON BEAM CROSS-LINKING OF A FLEXIBLE PLASTIC HOSE
PROCÉDÉ DE RÉTICULATION SOUS FAISCEAU D'ÉLECTRONS D'UN TUYAU FLEXIBLE EN MATIÈRE PLASTIQUE

(30) Priorität: 10.03.2017 DE 102017105137
(43) Veröffentlichungstag der Anmeldung: 15.01.2020
(73) Patentinhaber: REHAU Industries SE & Co. KG, 95111 Rehau (DE)
(72) Erfinder: BIEDERMANN, Armin, 95131 Schwarzenbach am Wald (DE); RUCKDÄSCHEL, Gerhard, 95163 Weissenstadt (DE); ZAHN, Cornelia, 96047 Bamberg (DE); WAZLAWIK, Klaus, 95030 Hof (DE)
(86) Internationale Anmeldenummer: PCT/EP2018/000087
(87) Internationale Veröffentlichungsnummer: WO 2018/162118

(56) Entgegenhaltungen:
- EP-A1- 0 012 330
- DE-A1- 3 844 232
- DE-B1- 1 504 779
- DE-T2- 69 413 804
- US-A- 3 253 619
- US-A- 3 773 870

## Beschreibung

Die Erfindung betrifft ein Verfahren zur Elektronenstrahlvernetzung eines flexiblen Kunststoff-Schlauches gemäß den Merkmalen des Oberbegriffs des Patentanspruchs 1.

Schlauchleitungen zum Transport von flüssigen oder gasförmigen Medien mit einer Schlauchschicht aus vernetzbarem Polyethylen sind hinlänglich bekannt und beispielsweise in der DE 33 10 294 C1 beschrieben. Bei der in dieser Schrift beschriebenen Silanvernetzung kann unter Einsatz von Silan eine Quervernetzung von beispielsweise Polyethylen-Molekülen herbeigeführt werden. Diese Vernetzung führt u.a. zu einer gegenüber unvernetzten Schläuchen erhöhten thermischen Belastbarkeit, wobei der Vernetzungsgrad gemäß DIN EN ISO 10147 üblicherweise > 60 % beträgt.

Eine andere Vernetzungsmethode ist das sogenannte Elektronenstrahlverfahren. Beim Elektronenstrahlverfahren wird die vernetzbare Schlauchschicht mit Elektronen beschossen, wodurch eine Aktivierungsenergie hervorgerufen wird, die zu einer Vernetzung der Polymer-Ketten, z.B. Polyethylen-Ketten führt. Auch auf diese Art und Weise und kann z.B. die thermische Belastbarkeit des Schlauches erhöht werden.

Beim Elektronenstrahlverfahren werden die zu vernetzenden Kunststoff-Schläuche regelmäßig einer eine Elektronenstrahlquelle aufweisenden Vernetzungseinrichtung zugeführt, bei der besondere Bestimmungen hinsichtlich Arbeitssicherheit etc. zu beachten sind. Gemäß dem Stand der Technik werden die Schläuche in Form einzelner, bereits gewickelter Bunde mit einer Länge von beispielsweise 30 oder 50 m auf Transportvorrichtungen der Elektronenstrahlquelle zugeführt. Aufgrund der großen Schlauchlänge weisen die einzelnen Schlauchbunde jeweils eine Vielzahl von Schlauchwicklungen auf, die von den Elektronenstrahlen allesamt durchdrungen werden müssen, um über die gesamte Schlauchlänge eine vollständige Vernetzung zu gewährleisten. Dies führt im Stand der Technik dazu, dass die Bunde während des Elektronenstrahlverfahrens mehrfach gewendet werden und zwischen den einzelnen Bestrahlungsvorgängen abkühlen müssen, um eine Überhitzung des Schlauches durch zu lange Elektronenbestrahlung zu vermeiden. Es verbleibt hierbei das grundsätzliche Problem, dass die nicht vollständige Vernetzung der Innenwicklungen des Schlauchbundes eine chronische Schwachstelle des Verfahrens darstellt, welches darüber hinaus sehr aufwändig ist.

Aus der DE 694 13 804 T2 sowie der DE 38 44 232 A1 sind Verfahren mit den Merkmalen des Oberbegriffs des Patentanspruchs 1 bekannt.

Der Erfindung liegt die Aufgabe zugrunde, ein Verfahren zur Elektronenstrahlvernetzung eines flexiblen, Kunststoff-Schlauches anzugeben, welches gegenüber dem Stand der Technik einfacher und kostengünstiger durchführbar ist.

Diese Aufgabe wird gelöst durch ein Verfahren mit den Merkmalen des Patentanspruchs 1. Erfindungsgemäß wird also von der im Stand der Technik bekannten Vorgehensweise Abstand genommen, bei der der Kunststoff-Schlauch in separaten Bunden vereinzelt der Vernetzungseinrichtung zugeführt wird. Stattdessen wird im Zuge eines Endlosverfahrens der Kunststoff-Schlauch mit einer, vorzugsweise konstanten, Transportgeschwindigkeit kontinuierlich an der Elektronenstrahlquelle vorbei transportiert, so dass diese den Schlauch problemlos komplett durchstrahlen und damit vernetzen kann. Die bei der bundförmigen Bestrahlungsmethode bekannten Nachteile einer nicht vollständigen Elektronenbestrahlung insbesondere der mittigen Schlauchwicklungen können somit im Rahmen des erfindungsgemäßen Verfahrens vermieden werden. Vielmehr muss die Elektronenstrahlung lediglich einen einzelnen Schlauch durchdringen, um die gewünschte Vernetzung über den gesamten Schlauchquerschnitt hervorzurufen. Die genannte Transportgeschwindigkeit des Kunststoff-Schlauches beträgt vorzugsweise 0,5 m/min bis 1 m/min.

Erfindungsgemäß weist der Kunststoff-Schlauch einen freien Innendurchmesser von 0,8 bis 2 cm auf. Bei vergleichsweise geringen Schlauchdurchmessern ist es erfindungsgemäß ohne große Probleme möglich, die gewünschte vollständige Strahlenvernetzung über den gesamten Schlauchquerschnitt im Wege eines kontinuierlichen Verfahrens durchzuführen. Der Kunststoff-Schlauch ist derart flexibel, dass er knickfrei auf eine Schlauchtrommel mit einem Durchmesser von 40 cm, vorzugsweise 20 cm, aufwickelbar ist. Die vorliegende Erfindung betrifft also die Vernetzung von Schläuchen, welche eine sehr hohe Flexibilität aufweisen und damit von starren Rohren zu unterscheiden sind.

Erfindungsgemäß wird der Kunststoff-Schlauch mehrfach kontinuierlich an der Elektronenstrahlquelle vorbeigeführt. Hierdurch kann auch im Rahmen des erfindungsgemäßen Verfahrens durch eine mehrfache Bestrahlung besonders sicher gewährleistet werden, dass die gewünschte vollständige Vernetzung auch tatsächlich stattfindet. Im Rahmen der Erfindung liegt es hierbei insbesondere, dass der Kunststoff-Schlauch, vorzugsweise innerhalb der Vernetzungseinrichtung, über mindestens zwei rotierende, vorzugsweise gegensinnig rotierende, parallel zueinander angeordnete Walzen geführt wird. Hierbei kann der Kunststoff-Schlauch insbesondere schlingenförmig über die Walzen geführt werden und im Rahmen des Vernetzungsvorgangs mehrfach von einer Walze auf die andere Walze wechseln. Dies ermöglicht eine sehr kompakte Führung des kontinuierlich durch die Vernetzungseinrichtung transportierten Schlauches während der Strahlenvernetzung.

Zweckmäßigerweise ist die Elektronenstrahlquelle linienförmig ausgebildet und verfahrenstechnisch zwischen den beiden Walzen, vorzugsweise parallel zu diesen, angeordnet. Somit kann erfindungsgemäß der Schlauch über die beiden Walzen mehrfach durch die linienförmige Elektronenbestrahlung hindurchgeführt werden, so dass auf platzsparende Weise eine nahezu beliebig häufige Bestrahlung des Schlauches in definierter Form erfolgen kann. Dies erlaubt insbesondere auch die Verwendung einer vergleichsweise energiearmen Strahlungsquelle, wodurch sich energetische Vorteile, aber auch Vorteile hinsichtlich der Arbeitssicherheit ergeben. Vorzugsweise findet die Vernetzung bei einer Temperatur von 40 °C bis 80 °C, z.B. 50 °C bis 70 °C statt. Gemäß einer bevorzugten Ausführungsform der Erfindung wird der Kunststoff-Schlauch im Rahmen des kontinuierlichen Vernetzungsverfahrens von einer Schlauchtrommel abgewickelt, danach strahlenvernetzt und anschließend auf eine weitere Schlauchtrommel aufgewickelt.

Ferner stellt die Schlauchschicht aus vernetzbarem Kunststoffmaterial erfindungsgemäß die innerste Schicht des Kunststoff-Schlauches dar. Weiterhin wird erfindungsgemäß auf die Schlauchschicht aus vernetzbarem Kunststoffmaterial eine, vorzugsweise aus Filamenten, z.B. Fäden und / oder Fasern, bestehende Armierungsschicht aufgebracht. Diese Armierungsschicht kann um die Schlauchschicht gewickelt und / oder geflochten sein. Die Filamente können aus textilem und / oder keramischem und / oder polymerem und / oder mineralischem (z.B. Glas-) und / oder kohlenstoff- und / oder metallischem Material bestehen. Ferner kann eine die Armierungsschicht umgebende Außenschicht vorgesehen sein, welche hinsichtlich der Armierungsschicht insbesondere eine Schutzfunktion aufweist.

Gegenstand der Erfindung ist auch ein mit dem erfindungsgemäßen Verfahren hergestellter Kunststoff-Schlauch. Der erfindungsgemäß hergestellte Kunststoff-Schlauch kann beispielsweise als Industrieschlauch für Pneumatik- oder Druckluft sowie zur Industriewässer-, Chemikalien- oder sonstigen Medienförderung und -verteilung eingesetzt werden; ebenso im landwirtschaftlichen Anwendungsbereich. Eine bevorzugte Anwendung findet die Schlauchleitung insbesondere im Trinkwasser- und Sanitärbereich, beispielsweise als Inliner zum Einzug in eine äußere Hülle, z.B. einem Panzerschlauch.

Im Folgenden wird die Erfindung anhand einer lediglich ein Ausführungsbeispiel darstellenden Zeichnung ausführlich erläutert. Es zeigen schematisch:
- Fig. 1:: ein Verfahren zur Elektronenstrahlvernetzung eines flexiblen Kunststoff-Schlauches gemäß dem Stand der Technik;
- Fig. 2:: ein erfindungsgemäßes Verfahren zur Elektronenstrahlvernetzung eines flexiblen Kunststoff-Schlauches;
- Fig. 3:: die Draufsicht X in Fig. 2 und
- Fig. 4:: eine Querschnittsdarstellung des Kunststoff-Schlauches gemäß dem Schnitt A - A in Fig. 3).

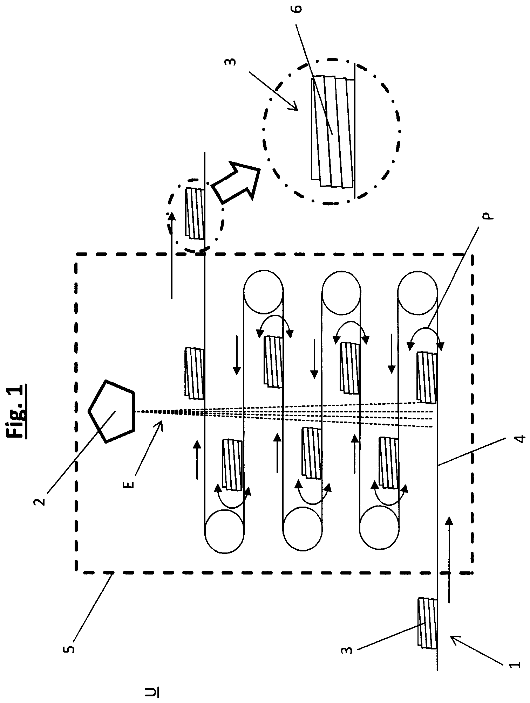

Die Fig. 1 zeigt ein Verfahren zur Elektronenstrahlvernetzung eines flexiblen Kunststoff-Schlauches 1 mittels einer Elektronenstrahlquelle 2 gemäß dem Stand der Technik. Der Kunststoff-Schlauch 1 weist eine (in Fig. 1 nicht näher dargestellte) Schlauchschicht aus vernetzbarem Polyethylen auf. Gemäß dem Stand der Technik werden zur Vernetzung einzelne flexible Kunststoff-Schläuche 1 als jeweils aufgewickelte Bunde 3 mit einer Länge von beispielsweise 30 oder auch 50 m mittels einer Transportvorrichtung 4 einer die Elektronenstrahlquelle 2 aufweisenden Vernetzungseinrichtung 5 zugeführt. In der Vernetzungseinrichtung 5 wird in dem an der Elektronenstrahlquelle 2 als Wickelbund 3 vorbeigeführten Kunststoff-Schlauch 1 durch Elektronenbestrahlung E eine Vernetzung des Polyethylens hervorgerufen. Die Vernetzungseinrichtung 5 bildet eine Einhausung für die Elektronenstrahlquelle 2, so dass diese von der äußeren Umgebung U abgeschirmt wird. Um einerseits eine Überhitzung des Kunststoff-Schlauches 1 durch die Elektronenstrahlung E zu verhindern und dabei gleichzeitig aber eine vollständige Vernetzung zu gewährleisten, muss der Schlauchbund 3 nach einer Einzelbestrahlung zunächst abkühlen und dann gewendet werden (in Fig.1 durch entsprechende Pfeile P angedeutet), bevor danach eine weitere Bestrahlung von der anderen Seite des Bundes 3 aus vorgenommen werden kann. Nur so kann erreicht werden, dass insbesondere auch die mittigen Schlauchwicklungen 6 des Bundes 3 (s. vergrößerte Darstellung eines Bundes in Fig. 1) ausreichend bestrahlt und vernetzt werden.

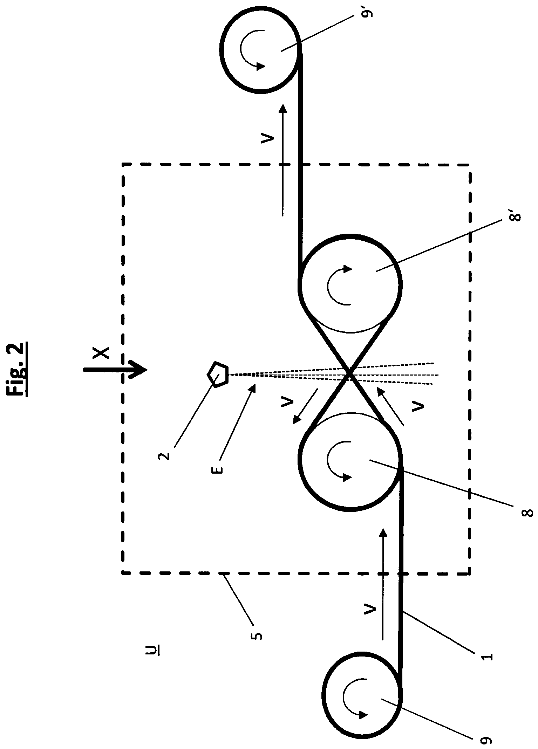

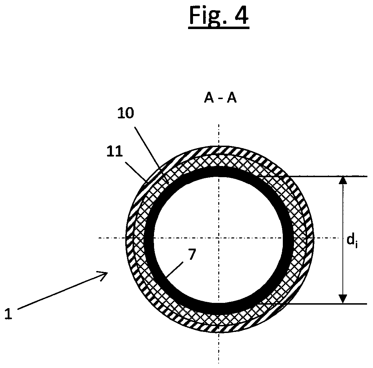

In Fig. 2 ist nun das erfindungsgemäße Verfahren zur Elektronenstrahlvernetzung eines flexiblen Kunststoff-Schlauches 1 mittels einer Elektronenstrahlquelle 2 dargestellt. Analog zum Beispiel gemäß Fig. 1 weist auch hier der Kunststoff-Schlauch 1 eine Schlauchschicht 7 aus vernetzbarem Polyethylen auf (s. Fig. 4). Erfindungsgemäß wird jedoch der flexible Kunststoff-Schlauch 1 in kontinuierlicher Weise mit einer konstanten Transportgeschwindigkeit v einer die Elektronenstrahlquelle 2 aufweisenden Vernetzungseinrichtung 5 zugeführt. Im Rahmen der Erfindung erfolgt die Elektronenbestrahlung E des Kunststoff-Schlauches 1 also im Wege eines mit der Geschwindigkeit v betriebenen stationären Endlosverfahrens. In der Vernetzungseinrichtung 5 wird also durch Elektronenbestrahlung E des kontinuierlich mit der Geschwindigkeit v an der Elektronenstrahlquelle 2 vorbeilaufenden Kunststoff-Schlauches 1 eine Vernetzung der vernetzbaren Polyethylen-Schlauchschicht 7 des Kunststoff-Schlauches 1 durchgeführt. Auch beim erfindungsgemäßen Ausführungsbeispiel gemäß Fig. 2 bildet die Vernetzungseinrichtung 5 eine Einhausung für die Elektronenstrahlquelle 2, so dass diese von der äußeren Umgebung U abgeschirmt wird. Wie insbesondere der Fig. 4 zu entnehmen ist, weist der Kunststoff-Schlauch 1 einen freien Innendurchmesser dᵢ von 0,8 bis 2 cm auf. Ferner ist der Kunststoff-Schlauch 1 derart flexibel, dass er knickfrei auf eine Schlauchtrommel mit einem Durchmesser von 40 cm aufwickelbar ist.

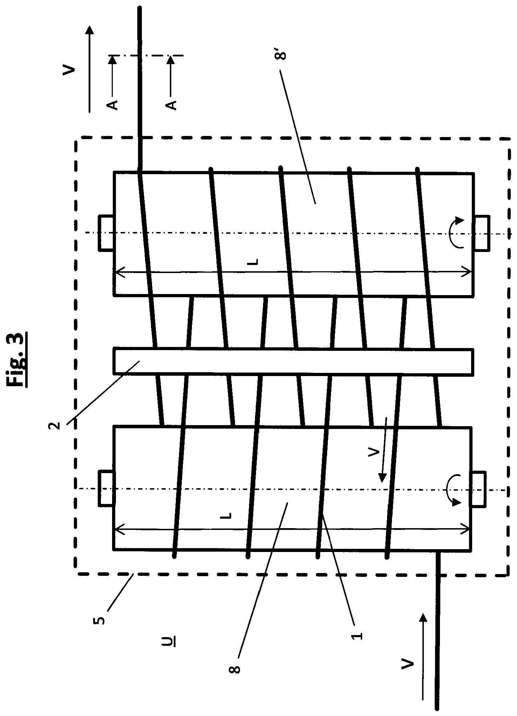

Anhand der Fig. 2 und 3 ist ferner erkennbar, dass der Kunststoff-Schlauch 1 mehrfach kontinuierlich mit der konstanten Transportgeschwindigkeit v an der Elektronenstrahlquelle 2 vorbeigeführt und hierbei durch die Elektronenbestrahlung E vernetzt wird. Der Kunststoff-Schlauch 1 wird hierbei innerhalb der Vernetzungseinrichtung 5 über zwei gegensinnig rotierende, parallel zueinander angeordnete Walzen 8, 8' geführt. Der Kunststoff-Schlauch 1 wird schlingenförmig über die einzelnen Walzen 8, 8' geführt und wechselt während des mehrstufigen Vernetzungsvorgangs mehrfach von einer Walze 8 auf die andere Walze 8' und umgekehrt. Dadurch bildet der Kunststoff-Schlauch 1 in der Seitenansicht gemäß Fig. 2 eine "8".Die Elektronenstrahlquelle 2 ist linienförmig ausgebildet und verfahrenstechnisch zwischen den beiden Walzen 8, 8' parallel zu diesen angeordnet (s. Fig. 3). D.h., dass der Kunststoff-Schlauch 1 immer während eines Wechsels von einer Walze auf die andere der Elektronenbestrahlung E ausgesetzt wird. Mit entsprechender Schlingenführung kann also der Kunststoff-Schlauch 1 bei ausreichend großer Länge L der Walzen (z.B. mindestens 1 m) praktisch beliebig oft an der Elektrostrahlquelle 2 vorbeigeführt und somit eine vollständige Vernetzung auch bei einer vergleichsweise geringen Intensität der Elektronenstrahlquelle E sichergestellt werden. Die Umfangsgeschwindigkeit der beiden Walzen 8, 8' ist identisch und entspricht der Transportgeschwindigkeit v des Kunststoff-Schlauches 1. Die Vernetzung findet im Ausführungsbeispiel bei einer Temperatur von 50 °C bis 70 °C statt. Wie der Fig. 2 ferner zu entnehmen ist, wird der Kunststoff-Schlauch 1 im Rahmen des kontinuierlichen Vernetzungsverfahrens mit der Transportgeschwindigkeit v, die sich beispielsweise im Bereich von 0,1 m/min bis 2 m/min bewegt, von einer Schlauchtrommel 9 abgewickelt, danach mittels der Elektronenstrahlquelle 2 strahlenvernetzt und anschließend wieder auf eine weitere Schlauchtrommel 9' aufgewickelt.

Wie der Fig. 4 zu entnehmen ist, stellt im Ausführungsbeispiel die Schlauchschicht 7 aus vernetzbarem Polyethylen die innerste Schicht des Kunststoff-Schlauches 1 dar. Auf die Schlauchschicht 7 ist im Ausführungsbeispiel eine Armierungsschicht 10 aus, z.B. mineralischen, Fäden aufgebracht. Diese Armierungsschicht 10 ist um die Schlauchschicht 7 gewickelt. Auf die Armierungsschicht 10 ist eine die Armierungsschicht 10 umgebende Außenschicht 11 aufgetragen. Alternativ hierzu kann der fertig hergestellte Kunststoff-Schlauch 1 aber auch insbesondere lediglich aus der Schlauchschicht 7 aus vernetztem Polyethylen bestehen. Dies ist vorzugsweise dann der Fall, sofern der Kunststoff-Schlauch 1 als Inliner zum Einzug in ein äußeres Gebilde, beispielsweise einen Panzerschlauch, vorgesehen ist. Eine solche Anwendung ist vor allem im Trinkwasser- und/oder Sanitärbereich von Bedeutung.

## Patentansprüche

1. Verfahren zur Elektronenstrahlvernetzung eines flexiblen Kunststoff-Schlauches (1) mittels mindestens einer Elektronenstrahlquelle (2),
- wobei der Kunststoff-Schlauch (1) zweckmäßigerweise mindestens eine Schlauchschicht (7) aus vernetzbarem Kunststoffmaterial, vorzugsweise Polyethylen, aufweist,
- wobei der flexible Kunststoff-Schlauch (1) in kontinuierlicher Weise mit einer, vorzugsweise konstanten, Transportgeschwindigkeit (v) einer die Elektronenstrahlquelle (2) aufweisenden Vernetzungseinrichtung (5) zugeführt wird,
- wobei in der Vernetzungseinrichtung (5) durch Elektronenbestrahlung (E) des kontinuierlich an der Elektronenstrahlquelle (2) vorbeilaufenden Kunststoff-Schlauches (1) eine Vernetzung des Kunststoff-Schlauches (1) erfolgt,
- wobei der Kunststoff-Schlauch (1) mehrfach kontinuierlich an der Elektronenstrahlquelle (2) vorbeigeführt wird, und
- wobei die Schlauchschicht (7) aus vernetzbarem Kunststoffmaterial die innerste Schicht des Kunststoff-Schlauchs (1) darstellt,
**dadurch gekennzeichnet, dass** der Kunststoff-Schlauch (1) einen freien Innendurchmesser (dᵢ) von 0,8 bis 2 cm aufweist und derart flexibel ist, dass er knickfrei auf eine Schlauchtrommel mit einem Durchmesser von 40 cm aufwickelbar ist, und dass auf die Schlauchschicht (7) aus vernetzbarem Kunststoffmaterial eine, vorzugsweise aus Filamenten, z.B. Fäden und / oder Fasern, bestehende Armierungsschicht (10) aufgebracht ist.

2. Verfahren nach Anspruch 1, **dadurch gekennzeichnet, dass** der Kunststoff-Schlauch (1) über mindestens zwei rotierende, vorzugsweise gegensinnig rotierende, parallel zueinander angeordnete Walzen (8, 8') geführt wird.

3. Verfahren nach Anspruch 2, **dadurch gekennzeichnet, dass** der Kunststoff-Schlauch (1) schlingenförmig über die einzelnen Walzen (8, 8') geführt wird und im Rahmen des Vernetzungsvorgangs mehrfach von einer Walze (8, 8') auf die andere Walze (8', 8) wechselt.

4. Verfahren nach Anspruch 3, **dadurch gekennzeichnet, dass** die Elektronenstrahlquelle (5) linienförmig ausgebildet und verfahrenstechnisch zwischen den beiden Walzen (8, 8') und vorzugsweise parallel zu diesen angeordnet ist.

5. Verfahren nach einem der Ansprüche 1 bis 4, **dadurch gekennzeichnet, dass** die Vernetzung bei einer Temperatur von 40 °C bis 80 °C, z.B. 50 °C bis 70 °C stattfindet.

6. Verfahren nach einem der Ansprüche 1 bis 5, **dadurch gekennzeichnet, dass** der Kunststoff-Schlauch (1) im Rahmen des kontinuierlichen Vernetzungsverfahrens von einer Schlauchtrommel (9) abgewickelt, danach strahlenvernetzt und anschließend auf eine weitere Schlauchtrommel (9') aufgewickelt wird.

7. Kunststoff-Schlauch (1), hergestellt nach einem Verfahren gemäß einem der Ansprüche 1 bis 6.

## Claims

1. Method for electron beam cross-linking of a flexible plastic tube (1) by means of at least one electron beam source (2),
- wherein the plastic tube (1) expediently has at least one tube layer (7) made of cross-linkable plastic material, preferably polyethylene,
- wherein the flexible plastic tube (1) is fed in a continuous manner at a preferably constant transport speed (v) to a cross-linking device (5) having the electron beam source (2)
- wherein cross-linking of the plastic tube (1) takes place in the cross-linking device (5) by electron irradiation (E) of the plastic tube (1) passing continuously past the electron beam source (2),
- wherein the plastic tube (1) is continuously guided past the electron beam source (2) several times, and
- wherein the tube layer (7) made of cross-linkable plastic material represents the innermost layer of the plastic tube (1),
**characterised in that** the plastic tube (1) has a free inside diameter (di) of 0.8 to 2 cm and is so flexible that it can be wound onto a tube reel with a diameter of 40 cm without kinking, and **in that** a reinforcing layer (10), preferably consisting of filaments, e.g. threads and/or fibres, is applied to the tube layer (7) made of cross-linkable plastic material.

2. Method according to claim 1, **characterised in that** the plastic tube (1) is guided over at least two rotating rollers (8, 8'), preferably rotating in opposite directions and arranged parallel to one another.

3. Method according to claim 2, **characterised in that** the plastic tube (1) is guided in a loop over the individual rollers (8, 8') and changes several times from one roller (8, 8') to the other roller (8', 8) during the cross-linking process.

4. Method according to claim 3, **characterised in that** the electron beam source (5) has a linear design and is arranged between the two rollers (8, 8') and preferably parallel to them.

5. Method according to any one of claims 1 to 4, **characterised in that** the cross-linking takes place at a temperature of 40°C to 80°C, e.g. 50°C to 70°C.

6. Method according to any one of claims 1 to 5, **characterised in that** the plastic tube (1) is unwound from a tube reel (9) as part of the continuous cross-linking process, then radiation cross-linked, and then wound onto a further tube reel (9').

7. Plastic tube (1), produced according to a method according to any one of claims 1 to 6.

## Revendications

1. Procédé de réticulation par faisceau d'électrons d'un tuyau en plastique flexible (1) au moyen d'au moins une source de faisceau d'électrons (2),
- le tuyau en plastique (1) présentant de manière appropriée au moins une couche de tuyau (7) en matière plastique réticulable, de préférence en polyéthylène,
- le tuyau en plastique flexible (1) étant amené de manière continue à une vitesse de transport (v), de préférence constante, à un dispositif de réticulation (5) présentant la source de faisceau d'électrons (2),
- une réticulation du tuyau en plastique (1) étant effectuée dans le dispositif de réticulation (5) par exposition à un faisceau d'électrons (E) du tuyau en plastique (1) passant en continu devant la source de faisceau d'électrons (2),
- le tuyau en plastique (1) étant passé plusieurs fois en continu devant la source de faisceau d'électrons (2), et
- la couche de tuyau (7) en matière plastique réticulable constituant la couche la plus intérieure du tuyau en plastique (1),
**caractérisé en ce que** le tuyau en plastique (1) présente un diamètre intérieur libre (di) de 0,8 à 2 cm et est flexible de telle sorte qu'il peut être enroulé sans pli sur un tambour de tuyau d'un diamètre de 40 cm, et **en ce qu'**une couche d'armature (10), de préférence constituée de filaments, p. ex. de fils et/ou de fibres, est appliquée sur la couche de tuyau (7) en matière plastique réticulable.

2. Procédé selon la revendication 1, **caractérisé en ce que** le tuyau en plastique (1) est guidé sur au moins deux rouleaux (8, 8') tournant, de préférence tournant en sens inverse, agencés parallèlement l'un à l'autre.

3. Procédé selon la revendication 2, **caractérisé en ce que** le tuyau en plastique (1) est guidé en forme de boucle sur les rouleaux (8, 8') individuels et passe plusieurs fois d'un rouleau (8, 8') à l'autre rouleau (8', 8) dans le cadre du processus de réticulation.

4. Procédé selon la revendication 3, **caractérisé en ce que** la source de faisceau d'électrons (5) est réalisée sous forme linéaire et est agencée, du point de vue du procédé, entre les deux rouleaux (8, 8') et de préférence parallèlement à ceux-ci.

5. Procédé selon l'une quelconque des revendications 1 à 4, **caractérisé en ce que** la réticulation a lieu à une température de 40 °C à 80 °C, p. ex. de 50 °C à 70 °C.

6. Procédé selon l'une quelconque des revendications 1 à 5, **caractérisé en ce que**, dans le cadre du procédé de réticulation en continu, le tuyau en plastique (1) est déroulé d'un tambour de tuyau (9), puis réticulé par faisceau et ensuite enroulé sur un autre tambour de tuyau (9').

7. Tuyau en plastique (1), fabriqué par un procédé selon l'une quelconque des revendications 1 à 6.
